# EUROPEAN PATENT SPECIFICATION

(11) **EP 3 032 969 B1**
(45) Date of publication and mention of the grant of the patent: **01.03.2017**
(21) Application number: 14733366.0
(22) Date of filing: 05.06.2014
(51) Int. Cl.: A23B 7/152, A23N 15/06, A23B 7/144, F25D 11/00

(54) **PRODUCE RIPENING CHAMBER**
PRODUKTREIFUNGSKAMMER
CHAMBRE DE MATURATION DE PRODUCTION

(30) Priority: 15.08.2013 EP 13180570
(43) Date of publication of application: 22.06.2016
(73) Proprietor: Garratt, Alan, West Thurrock Essex RM19 1NZ (GB)
(72) Inventor: TURBITT, Neil, Rayleigh Essex SS6 9PP (GB)
(74) Representative: Harrison IP Limited
(86) International application number: PCT/IB2014/061983
(87) International publication number: WO 2015/022588

(56) References cited:
- WO-A1-97/39639
- WO-A2-99/57020
- JP-A- 2003 009 835
- US-A- 5 475 926
- US-A- 5 531 158
- US-B1- 7 913 513

## Description

### Field of the invention

The present invention relates to a produce ripening chamber that may form part of a stationary installation or of a transport container for distribution of agricultural produce.

### Background of the invention

In order to ripen produce, such as bananas, it is known to place pallets carrying stacks of boxes containing the produce in a ripening chamber in which they are exposed to a re-circulating flow of air at a controlled temperature and containing metered amounts of a ripening agent, usually ethylene. The boxes have holes in their sides, as well as in their bases and lids, so that the air circulating in the ripening chamber passes through the boxes and over the produce.

As well as constructing ripening chambers as rooms in fixed buildings, it has also been proposed to use a transport container for distribution of agricultural produce as a ripening chamber. Such a transport container defines a sealed controlled environment for ripening the produce while in transit and/or while stationed in a depot, and comprises a plurality of fans for circulating air over pallets of the produce, an air conditioning system for maintaining the air circulated by the fans at a desired temperature, and a doping system for maintaining the concentration of a ripening agent in the circulated air at a desired level.

### Summary of the invention

According to the present invention, there is provided a ripening chamber, comprising an air conditioning system for circulating air through the chamber and regulating the air temperature and a doping system for regulating the concentration of a ripening agent in the circulated air, wherein the chamber is elongate and of rectangular cross section defined by a floor, a ceiling and side walls extending between the floor and the ceiling, the chamber having at least one kerb on the floor for spacing a pallet resting on the floor from a side wall and a duct arranged at the ceiling end of the latter side wall and operative to seal against the side facing the latter side wall of an upper produce box supported by the pallet so as to define an air flow channel between the boxes stacked on the pallet and the side wall, wherein at least an air blower and a heat exchanger of the air conditioning system are housed within the duct to force air at a controlled temperature to circulate through the air flow channel, the produce boxes being supported by the pallet and there being a clearance volume between the stack of boxes and the ceiling of the chamber whereby the circulation takes place in a plane perpendicular to the length of the chamber, and wherein the chamber is divided along its length into two or more mutually isolated ripening compartments by at least one partition that extends across the entire width of the chamber, the air conditioning systems and doping systems in the individual ripening compartments being controllable independently of one another.

Reference is made to WO 97/39639, JP 2003 009835,
US 7,913,513 and WO 99/57020, which show ripening chamber in which air is circulated through pallets in a plane normal to the length of the chamber. However, none of the references teaches dividing the chamber into mutually isolated compartments having independently controlled doping systems.

When several chambers are available in a large ripening facility, it is possible to operate different chambers to provide different ripening conditions, to enable the rate at which produce is to be ripened to be selected. However, when there is only one chamber available, for example when the chamber is within a transport container, it has previously only been possible to ripen all the contained produce at the same rate. This is not however always desirable. For example, if produce is being delivered to different locations, one may wish to delay the ripening to correspond to the travel time to the destination. As a further example, if different types of produce are being delivered, even to the same destination, one may wish to ripen one type of produce while holding back the ripening of another. By dividing the chamber longitudinally into different compartments that are isolated from one another and controllable independently, the invention enables produce within the same chamber, for example in a transport container, to be ripened at different rates.

If the pallets have boxes stacked eight high, then the duct will seal against the uppermost boxes, but if the boxes are stacked nine height, the duct will seal against the next to uppermost boxes but will have sufficient height to ensure that the air flow into and out of the duct is not obstructed by the ninth box.

In an embodiment of the invention, the chamber is symmetrical about a central plane and has kerbs adjacent both of the side walls and ducts near the upper ends of opposite side walls.

The partitions separating the ripening compartments, are preferably sealed and thermally insulating.

### Brief description of the drawings

The invention will now be described further, by way of example, with reference to the accompanying drawings, in which:
Figure 1 is a section through a ripening chamber of the invention taken in the plane I-I in Figure 3,
Figure 2 is a section similar to that of Figure 1 showing the ripening chamber filled with produce boxes stacked on pallets,
Figure 3 is a section in plane III-III in Figure 1,
Figure 4 is a section in the plane IV-IV in Figure 2,
Figure 5 is a side view of one of the air conditioning ducts in Figure 1,
Figure 6 is a section in the plane VI-VI in Figure 5,
Figure 7 is a section through the duct of Figure 5 in the plane designated VII-VII in Figure 6,
Figure 8 is a rear view of a transport container designed also to act as a ripening chamber,
Figure 9 is a front view of the container shown in Figure 8 with front doors closed, and
Figure 10 shows the compartments accessible by opening the front doors of the container.

### Detailed description of the embodiment

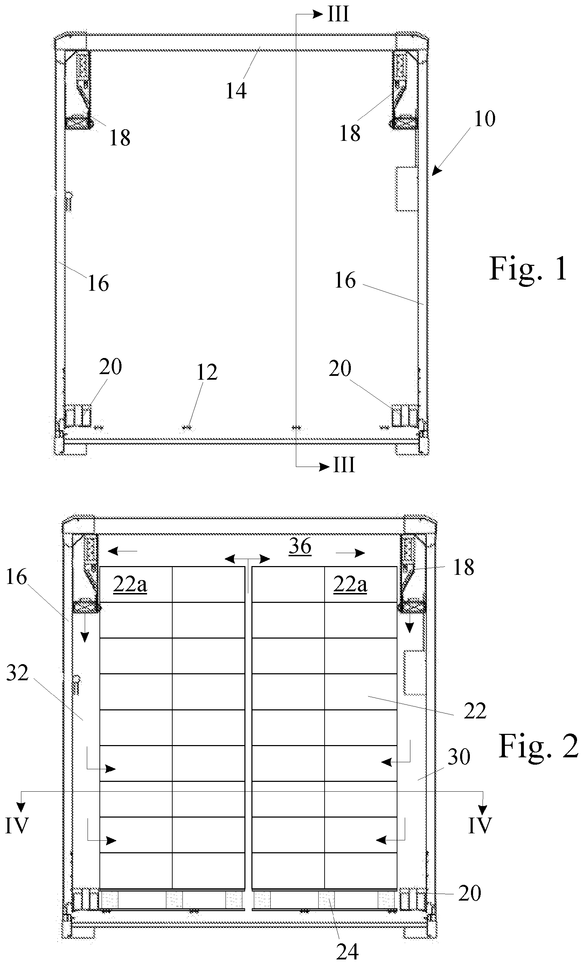

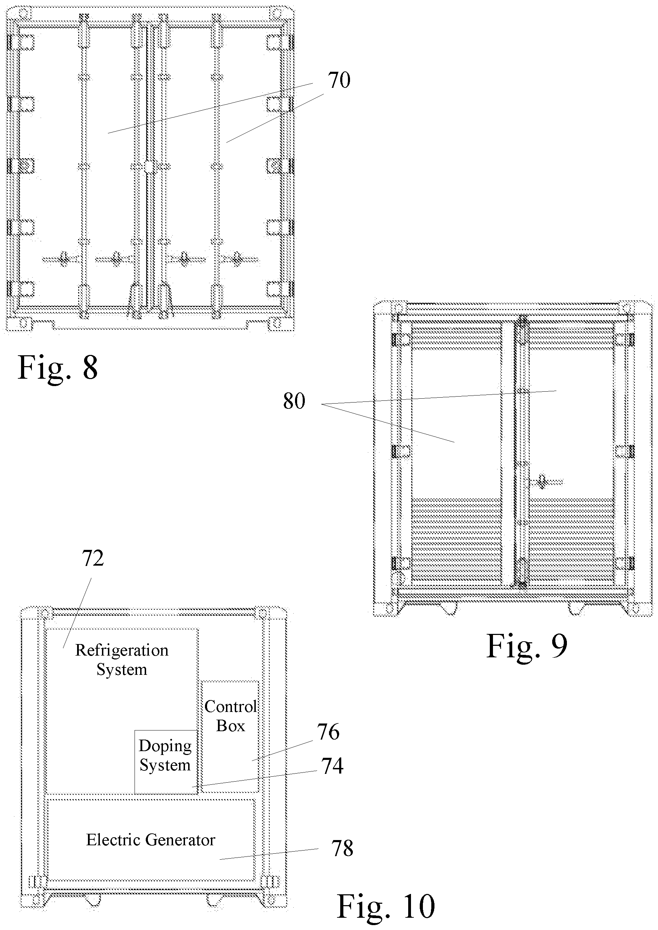

Figure 1 shows a vertical section through an empty ripening chamber 10 formed within the rear part of a transport container. The exterior of the container may be of conventional design with hinged doors 70 at the rear end, shown in Figure 8, to allow access to the ripening chamber. The front end of the container has a refrigeration system 72, a doping system 74, a control box 76 and, if required, an electric generator 78 with its own fuel supply, shown in Figure 10, housed behind front doors 80 shown in Figure 9.

The ripening chamber 10 has a floor 12, a ceiling 14 and two opposing side walls 16 extending over the length of the ripening chamber 10. Two ducts 18 extend along the corners between the side walls 16 and the ceiling 14 and two kerbs 20 are provided in the corners between the floor 12 and the side walls 16 to help in positioning pallets. Aside from acting as spacers sealing against the sides of the pallets, the kerbs 20 include grills and controlled dampers to admit fresh air into the air circulation circuit and allow air to escape to the ambient atmosphere.

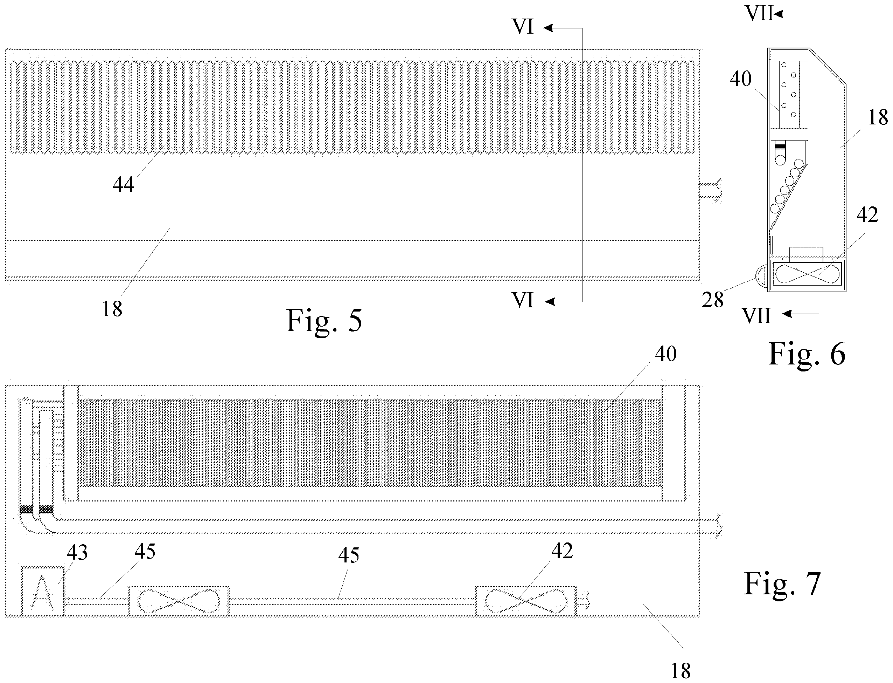

The same ripening chamber 10 is shown in Figure 2 when filled with produce boxes 22, stacked nine high on pallets 24. When the pallets 24 abut the kerbs 20, the sides of the next to uppermost boxes 22a abut and seal against the ducts 18, thereby forming two air circulation channels 30 and 32 between the stacks of boxes 22 and the side walls 16 of the ripening chamber 10. The seal between the boxes and the sides of ducts 18 may be by means of laterally projecting sealing pads 28 on the ducts 18 (see Figures 5 and 6).

As better shown in Figures 5, 6 and 7, the ducts 18 house heat exchange units 40 and fans 42. The fans 42, as shown in Figure 7, are mechanically connected to one another and to an actuator 43 by shafts 45 that allow the fans to be rotated about the axis of the shafts 45, to reverse the direction of air circulation. While it would alternatively be possible to reverse the direction of rotation of the fan blades electrically, mechanical rotation is preferred as it is more energy efficient.

The heat exchange units 40 are located behind louver-like vents 44 in the side walls of the ducts to communicate with a clearance volume 36 between the boxes 22 stacked on the pallets 20 and the ceiling 14 of the ripening chamber 10. The fans 42 on the other hand communicate through openings in the bottom walls of the ducts 18 with the circulation channels 30 and 32. Thus, when the fans 42 are operating, air is drawn through the vents 44, and is blown into the circulation channels 30 and 32 by the fans 42 after having first passed through the heat exchanger 40. The air then flows through holes in the sides of the boxes 20 and over the produce to be ripened before returning to the clearance volume 36, thereby completing the circuit, which is represented by arrows in Figure 2.

The reversing of the fans 42 serves to allow the direction of the air flow to be reversed. It is desirable to reverse the direction of air flow periodically in order to achieve more even ripening across the width of the pallet.

The heat exchangers 40 form part of a closed cooling circuit filled with a coolant comprising water and antifreeze. The coolant is itself cooled in a heat exchanger by the refrigeration circuit that is housed in the compartment 72 and that uses propane or other non-toxic liquid as a refrigerant. The refrigeration system may be conventional, being formed of a compressor, an expansion valve and an evaporator. The temperature of the coolant flowing through the heat exchanger 40 is regulated to maintain the circulating air at a desired temperature.

The doping system may comprise an ethylene generator for introducing metered quantities of ethylene into the ripening chamber. When the concentration of the ripening agent is to be reduced, air is discharge to atmosphere from within the ripening chamber and replaced by fresh air. The ripening chamber communicates with the ambient air through the controlled dampers built into in the kerbs 20. To avoid the need for special extraction fans, it is possible to open the dampers on the opposite sides of the ripening chamber and to reverse the direction of circulation in only one half of the chamber. In this way, the fan on one side acts to draw fresh air through the damper in its kerb while the fan on the opposite side expels air through its associated damper.

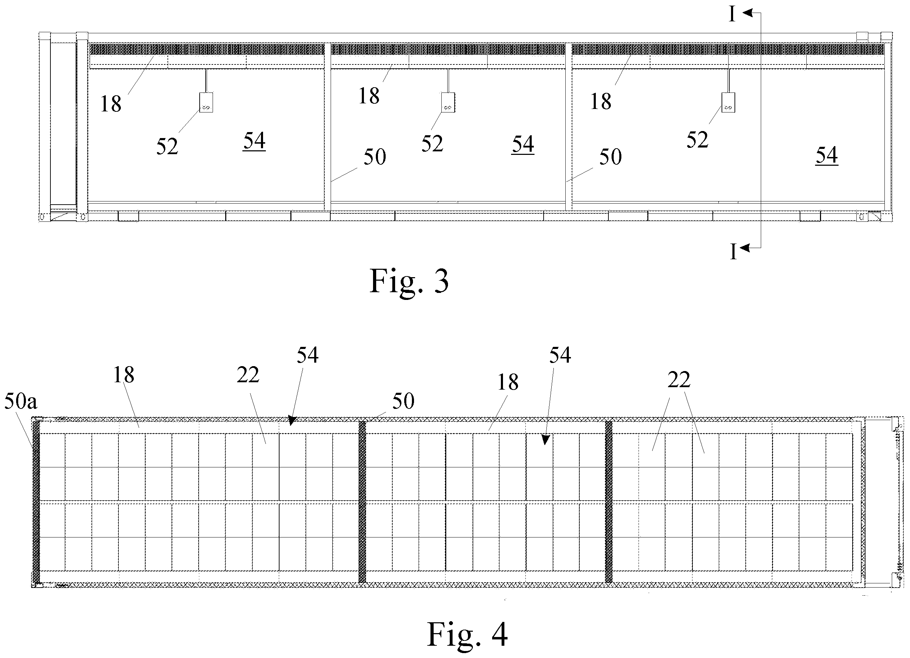

Referring now to Figure 3, it will be seen that along its length the ripening chamber is divided by partitions 50 into three compartments 54 each of which has its own control box 52. The partitions, which extend across the full width of the ripening chamber, are preferably sealed and thermally insulating so that adjacent compartments 54 may have different temperatures and concentrations of ripening agent. Hence, each partition may comprise a frame and a door hinged at its upper end about a horizontal hinge to stow away when open against the ceiling of the ripening chamber. The partitions may alternatively be formed of roller blinds guided in suitable channels to seal against the walls of the chamber.

The control boxes 52 are shown as being wall mounted for ease of operation, but if there is a risk of their interfering with the air flow, then they may alternatively be mounted within the kerbs 20.

The temperature, humidity, and ripening agent concentration in each of the compartments 54 can be set independently so that either different types of produce can be ripened at the same time or the same produce can be ripened at three different rates. In order to achieve this, the coolant circuits and the doping circuits of the three compartments can be regulated independently of one another.

An advantage of the design of the ripening chamber shown in the drawings is that the full height of the chamber is used to accommodate boxes stacked on pallets and no part of the headroom is taken up by ducts or fans, the latter being accommodated entirely within the space available between the sides of the boxes and the adjacent side walls of the container. Though maximising of the headroom within the ripening chamber is of particular importance when it is constructed within a transport container, the same architecture may be used in stationary installations where the head height may also be at a premium.

When implemented as a container, it is important to be able to access the interior of the ripening chamber even when the container is docked at a loading bay. This is enabled in the case of the container shown in Figure 8 by the doors 70 being able to be hinged back to lie flush against the outside of the side walls of the container before the container is reversed into the loading bay. As can be seen in Figure 4, a sealed and thermally insulating partition 50a of suitably modified construction is provided to maintain the rearmost compartment 54 sealed even when the container doors are open.

Though the illustrated embodiment is symmetrical about its centre line, it should be noted that this is not essential as there need only be one kerb and one duct when the chamber is only wide enough to accommodate one pallet.

While there need only be one refrigeration circuit, the coolant circulation through the heat exchangers of the separate compartments may be controlled independently from one another.

It has so far been assumed that the air conditioning system is required only to cool the circulating air but in certain circumstances it may be required to heat it. While it may be possible to reverse the refrigeration circuit to act as a heater, it is preferred for the heat exchangers 40 to act as heaters by incorporating electrical heating elements into them as this would allow one compartment to be heated while others are being cooled if they are all connected to a common refrigeration circuit.

## Claims

1. A ripening chamber comprising an air conditioning system for circulating air through the chamber and regulating the air temperature and a doping system for regulating the concentration of a ripening agent in the circulated air, wherein the chamber (10) is elongate and of rectangular cross section defined by a floor (12), a ceiling (14) and side walls (16) extending between the floor (12) and the ceiling (16), the chamber (10) having at least one kerb (20) on the floor for spacing a pallet (24) resting on the floor from a side wall (16) and a duct (18) arranged at the ceiling end of the latter side wall (16) and operative to seal against the side facing the latter side wall of an upper produce box (22a) supported by the pallet (24) so as to define an air flow channel (32) between the boxes (22) stacked on the pallet (24) and the side wall (16), wherein at least an air blower (42) and a heat exchanger (40) of the air conditioning system are housed within the duct (18) to force air at a controlled temperature to circulate through the air flow channel (32), the produce boxes (22) being supported by the pallet (24) and there being a clearance volume (36) between the stack of boxes (22) and the ceiling (14) of the chamber (10) whereby the circulation takes place in a plane perpendicular to the length of the chamber (10), and wherein the chamber (10) is divided along its length into two or more mutually isolated ripening compartments (54) by at least one partition (50) that extends across the entire width of the chamber (10), the air conditioning systems and doping systems in the individual ripening compartments being controllable independently of one another.

2. A ripening chamber as claimed in claim 1, wherein each partition (50) separating two ripening compartments is sealed and thermally insulating.

3. A ripening chamber as claimed in claim 1 or 2,
wherein at least one partition (50) comprises a frame and a door hinged at its upper end about a horizontal hinge, to enable the door to stow away when open against the ceiling (14) of the ripening chamber (10).

4. A ripening chamber as claimed in any preceding claim, wherein at least one partition (50) is formed of a roller blind guided in channels so as to seal against the walls of the chamber (10).

5. A ripening chamber as claimed in any preceding claim, wherein heating elements are provided in the duct associated with one compartment, to allow the circulated air in the compartment to be heated while the circulated air in another compartment is cooled.

6. A ripening chamber as claimed in any preceding claim, wherein the chamber (50) is symmetrical about a central plane and has kerbs (20) adjacent both of the side walls (16) and ducts (18) near the upper ends of opposite side walls.

7. A ripening chamber as claimed in any preceding claim, wherein direction of air flow of air blowers (42) of the air conditioning system associated with the ripening compartments are reversible.

8. A ripening chamber as claimed in claim 7, wherein at least one air blower (42) is a fan that is rotatably mounted within the duct (18) in order to reverse the direction of air flow.

9. A ripening chamber as claimed in any preceding claim, wherein a controlled damper is provided in the kerb to allow air to be admitted into or expelled from the interior of the ripening chamber (10).

## Patentansprüche

1. Reifekammer, die ein Klimatisierungssystem zum Zirkulieren von Luft durch die Kammer und zum Regulieren der Lufttemperatur und ein Dotierungssystem zum Regulieren der Konzentration eines Reifemittels in der zirkulierenden Luft umfasst, wobei die Kammer (10) länglich ist und einen rechteckigen Querschnitt hat, der durch einen Boden (12), eine Decke (14) und Seitenwände (16), die sich zwischen dem Boden (12) und der Decke (16) erstrecken, definiert wird, wobei die Kammer (10) zumindest einen Randstein (20) auf dem Boden zum Beabstanden einer auf dem Boden liegenden Palette (24) von einer Seitenwand (16) und einen Kanal (18) aufweist, der an dem Deckenende der letzteren Seitenwand (16) angeordnet und betriebsfähig ist, um gegen die Seite abzudichten, die gegenüber der letzteren Seitenwand einer oberen Produktkiste (22a) liegt, die durch die Palette (24) gestützt wird, sodass ein Luftströmungskanal (32) zwischen den Kisten (22), die auf der Palette (24) gestapelt sind, und der Seitenwand (16) definiert wird, wobei zumindest ein Luftgebläse (42) und ein Wärmeausstauscher (40) des Klimatisierungssystems innerhalb des Kanals (18) untergebracht sind, um Luft mit einer geregelten Temperatur zum Zirkulieren durch den Luftströmungskanal (32) zu drängen, wobei die Produktkisten (22) durch die Palette (24) gestützt sind, und wobei es einen Schadraum (36) zwischen dem Stapel der Kisten (22) und der Decke (14) der Kammer (10) gibt, wobei die Zirkulation auf einer Ebene senkrecht zu der Länge der Kammer (10) stattfindet, und wobei die Kammer (10) entlang ihrer Länge in zwei oder mehrere Reifefächer (54) unterteilt wird, die durch zumindest eine Trennwand (50) voneinander isoliert sind, die sich über die gesamte Breite der Kammer (10) erstreckt, wobei die Klimatisierungssysteme und Dotierungssysteme in den einzelnen Reifefächern unabhängig voneinander gesteuert werden können.

2. Reifekammer nach Anspruch 1, wobei jede Trennwand (50), die zwei Reifefächer trennt, abgedichtet und thermisch isoliert ist.

3. Reifekammer nach Anspruch 1 oder 2, wobei zumindest eine Trennwand (50) einen Rahmen und eine Tür umfasst, die gelenkig mit ihrem oberen Ende an einem horizontalen Scharnier verbunden ist, um zu ermöglichen, dass die Tür verstaut wird, wenn sie gegen die Decke (14) der Reifekammer (10) geöffnet wird.

4. Reifekammer nach einem der vorhergehenden Ansprüche, wobei zumindest eine Trennwand (50) durch ein Rollo gebildet wird, das in Kanälen geführt wird, sodass die Wände der Kammer (10) abgedichtet sind.

5. Reifekammer nach einem der vorhergehenden Ansprüche, wobei Heizelemente in dem Kanal bereitgestellt werden, die mit einem Fach verbunden sind, um zu ermöglichen, dass die zirkulierende Luft in dem Fach beheizt wird, während die zirkulierende Luft in einem anderem Fach gekühlt wird.

6. Reifekammer nach einem der vorhergehenden Ansprüche, wobei die Kammer (50) symmetrisch um eine mittlere Ebene verläuft und Randsteine (20), die angrenzend an die beiden Seitenwände (16) liegen, und Kanäle (18), die neben den oberen Enden gegenüberliegender Seitenwände liegen, aufweist.

7. Reifekammer nach einem der vorhergehenden Ansprüche, wobei die Richtung des Luftstroms der Luftgebläse (42) des Klimatisierungssystems, das mit den Reifefächern verbunden ist, umkehrbar ist.

8. Reifekammer nach Anspruch 7, wobei zumindest ein Luftgebläse (42) ein Lüfter ist, der drehbar innerhalb des Kanals (18) angebracht ist, um die Richtung des Luftstroms umzukehren.

9. Reifekammer nach einem der vorhergehenden Ansprüche, wobei ein steuerbarer Dämpfer in dem Randstein bereitgestellt wird, um zu ermöglichen, dass Luft in oder aus dem Inneren der Reifekammer (10) eingelassen oder ausgelassen wird.

## Revendications

1. Chambre de mûrissement comprenant un système de climatisation pour la circulation d'air dans la chambre et la régulation de la température de l'air, et un système de dopage pour la régulation de la concentration d'un agent de mûrissement dans l'air recyclé, la chambre (10) étant allongée et à section transversale rectangulaire définie par un plancher (12), un plafond (14), et des parois latérales (16) s'étendant entre le plancher (12) et le plafond (16), la chambre (10) possédant au moins une bordure (20) sur le plancher pour l'espacement d'une palette (24) posée au sol depuis une paroi latérale (16) et un conduit (18) agencé côté plafond de la dernière paroi latérale (16) et assurant l'étanchéité contre le côté faisant face à la dernière paroi latérale d'une boîte à produits agricoles supérieure (22a) supportée par la palette (24) de façon à définir un passage de circulation d'air (32) entre les boîtes (22) empilées sur la palette (24) et la paroi latérale (16), au moins une soufflante d'air (42) et un échangeur de chaleur (40) du système de climatisation étant contenus au sein du conduit (18) pour forcer la circulation d'air à température contrôlée dans le passage de circulation d'air (32), les boîtes à produits agricoles (22) étant supportées par la palette (24), et comprenant un volume de dégagement (36) entre la pile de boîtes (22) et le plafond (14) de la chambre (10), la circulation ayant lieu dans un plan perpendiculaire à la longueur de la chambre (10), et la chambre (10) étant divisée sur sa longueur en deux ou plusieurs compartiments de mûrissement (54) mutuellement isolés par au moins une cloison (50) s'étendant sur l'intégralité de la largeur de la chambre (10), les systèmes de climatisation et les systèmes de dopage dans les compartiments de mûrissement étant réglables indépendamment l'un de l'autre.

2. Chambre de mûrissement selon la revendication 1, chaque cloison (50) séparant deux compartiments de mûrissement étant scellée et thermiquement isolante.

3. Chambre de mûrissement selon la revendication 1 ou 2, au moins une cloison (50) comprenant un encadrement et une porte articulée sur son extrémité supérieure avec une charnière horizontale afin que la porte soit escamotable lors de l'ouverture de la porte contre le plafond (14) de la chambre de mûrissement (10).

4. Chambre de mûrissement selon une quelconque des revendications précédentes, au moins une cloison (50) étant composée d'un volet roulant guidé dans des rainures de façon à se placer en contact étanche contre les parois de la chambre (10).

5. Chambre de mûrissement selon une quelconque des revendications précédentes, des éléments de chauffage étant prévus dans le conduit associé avec un compartiment, afin de permettre le chauffage de l'air circulant dans le compartiment tandis que l'air circulant dans un autre compartiment est refroidi.

6. Chambre de mûrissement selon une quelconque des revendications précédentes, la chambre (50) étant symétrique autour d'un plan central et présentant des bordures (20) adjacentes à la fois aux parois latérales (16) et aux conduits (18) à proximité des extrémités supérieures de parois latérales opposées.

7. Chambre de mûrissement selon une quelconque des revendications précédentes, la direction du débit d'air des soufflantes d'air (42) du système de climatisation associé avec les compartiments de mûrissement étant réversible.

8. Chambre de mûrissement selon la revendication 7, au moins une soufflante d'air (42) étant un ventilateur monté de façon rotative au sein du conduit (18) de façon à inverser la direction du débit d'air.

9. Chambre de mûrissement selon une quelconque des revendications précédentes, un amortisseur contrôlé étant placé dans la bordure pour permettre l'introduction d'air dans l'intérieur de la chambre de mûrissement (10) ou son refoulement hors de celle-ci.
